(19)

Europäisches
Patentamt
European
Patent Office
Office européen
des brevets

(11)  **EP 1 826 919 A2**

(12)  **EUROPEAN PATENT APPLICATION**

(43) Date of publication:
**29.08.2007 Bulletin 2007/35**

(51) Int Cl.:
**H04B 7/08** (2006.01)

(21) Application number: **07101850.1**

(22) Date of filing: **06.02.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **24.02.2006 JP 2006049220**

(71) Applicant: **FUJITSU LIMITED
Kawasaki-shi,
Kanagawa 211-8588 (JP)**

(72) Inventors:
• **Ban, Yasumitsu,**
 **c/o Fujitsu Limited
 Kawasaki-shi,
 Kanagawa 211-8588 (JP)**
• **Hasegawa, Tsuyoshi,
 c/o Fujitsu Limited
 Kawasaki-shi,
 Kanagawa 211-8588 (JP)**

(74) Representative: **Hitching, Peter Matthew
 Haseltine Lake
 Lincoln House
 300 High Holborn
 London WC1V 7JH (GB)**

(54)  **Antenna diversity receiver**

(57)   An antenna diversity receiver includes a plurality of antennas (1, 2), a plurality of demodulating devices (F1 to FN) prepared per path, to which reception signals received by the plurality of antennas and coming from a plurality of paths are inputted, a synthesizing unit (14) synthesizing demodulated results of the reception signals with respect to the plurality of paths, which are outputted from the plurality of demodulating devices (F1 to FN), and a correlation calculating unit (15) calculating a correlation between the antennas that are common between the plurality of paths, and each of the demodulating devices (F1 to FN) has a plurality of demodulating units (5, 6) outputting demodulation signals (V1, V2) obtained by executing a demodulating process of the reception signals corresponding to the respective antennas, a path weight calculating unit (20) calculating a path weight representing a reception level ratio in the demodulating device by using a value obtained at a stage of the demodulating process by each of the demodulating units, and an output unit (13) outputting, to the synthesizing unit (14), as a result of the demodulation, a result of synthesizing the demodulation signals (V1, V2 of the respective demodulating units, which are multiplied by the synthesization coefficient using the correlation and by the path weight.

FIG. 3

**Description**

BACKGROUND OF THE INVENTION

1. Field of the Invention

The present invention relates to an antenna diversity receiver using a plurality of antennas in mobile communications and in wireless communications.

2. Description of the Related Art

A CDMA (Code Division Multiple Access) method is exemplified as a typical wireless communication method. The CDMA method involves performing RAKE synthesization about a plurality of transmission paths (paths) in order to improve a receiving quality. The RAKE synthesization includes SIR-RAKE (Signal-to-Interference Ratio RAKE) in which a synthesization coefficient is weighted with an inverse number of noise power (an auto-correlation of a noise) of each path so as to attain maximum ratio synthesization. A receiving method superior in receiving quality to the SIR-RAKE is needed for actualizing much-faster communications.

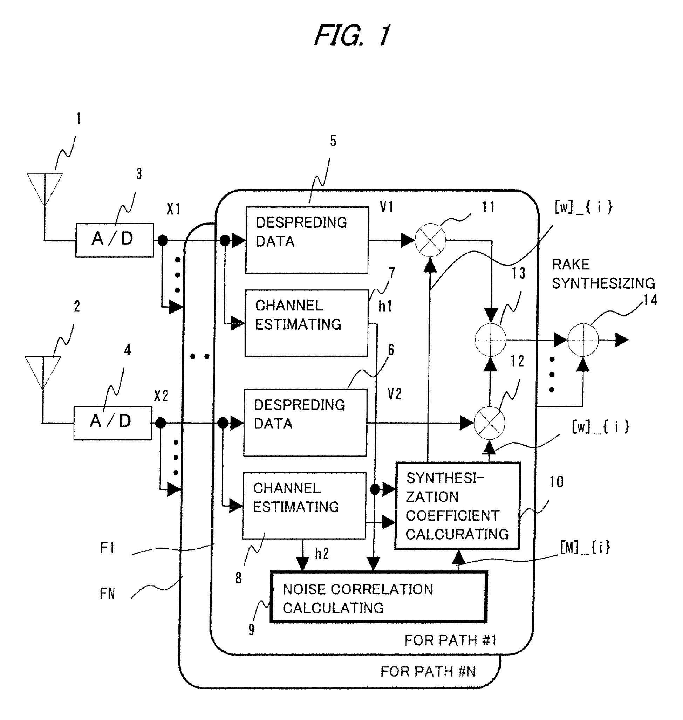

FIG. 1 is a diagram showing an example (a first conventional method) of a configuration of the antenna diversity receiver (RAKE receiver) in the prior art. The first conventional method is a method available for a case of providing a plurality of antennas. The receiver illustrated in FIG. 1 is provided with the plurality of antennas (antennas 1 and 2 in FIG. 1). Further, the receiver is provided with fingers (despreading demodulators) F of which the number corresponds to an arrival path count N (the example in FIG. 1 shows the fingers F1 through FN of which the number corresponds to the path count N).

Each of the fingers F has the same configuration. To give an explanation by exemplifying the finger F1, the finger F1 includes despreading data calculating units 5, 6 and channel estimating units, 7, 8 that correspond to antennas 1 and 2, a noise correlation calculating unit 9, a synthesization coefficient (weight) calculating unit 10, multipliers 11, 12, and a synthesizer 13. It is to be noted that a character representing a vector is embraced with angle brackets "[ ]" or expressed in bold face in the present specification.

In FIG. 1, a reception signal X1 received by the antenna 1 and transmitted through an A/D converter 3 is inputted to each of the fingers F1 - FN. Similarly, a reception signal X2 received by the antenna 2 and transmitted through an A/D converter 4 is inputted to each of the fingers F1 - FN. Herein, the finger F1 is defined as a demodulating unit for a first arrival path (path 1), and the fingers F2 through FN are demodulating units for a second path through an N-th path (paths 2 - N) at which the signal arrives with a delay from the path 1.

In the finger F1, the despreading data calculating unit 5 executes a despreading process of a data signal contained in the reception signal X1 of the antenna 1 by use of a despreading code replica for a predetermined data signal, and outputs a despreading data signal V1. On the other hand, the channel estimating unit 7 executes the despreading process of a common pilot signal contained in the reception signal X1, further executes a channel estimating process by employing a despreading value of the thus-despread common pilot signal, and outputs a channel estimated value (or an average value of the channel estimated values) h1. The despreading data calculating unit 6 and the channel estimating unit 8, in the same way as by the despreading data calculating unit 5 and the channel estimating unit 7, outputs a despreading data signal V2 and a channel estimated value h2 related to the reception signal X2 of the antenna 2.

The respective channel estimated values h1, h2 and the despreading value of the common pilot signal are inputted to the noise correlation calculating unit 9. The noise correlation calculating unit 9 calculates a noise correlation matrix " $[M]\_[i]$ " consisting of an auto-correlation and a cross-correlation in a case where the noise is defined as a difference between the channel estimated value and the despreading value of the common pilot signal, and inputs this noise correlation matrix to the synthesization coefficient calculating unit 10.

The synthesization coefficient calculating unit 10 calculates a synthesization coefficient vector " $[w]\_[i] = (wl, w2)$ " in a way that multiplies a channel estimated value vector $[h]$ having the channel estimated values h1, h2 as components by an inverse matrix of the noise correlation matrix " $[M]\_[i]$ " inputted from the noise correlation calculating unit 9, and outputs the calculated synthesization coefficient vector. Thereafter, each of the multipliers 11, 12 multiplies each of the despreading data signals V1, V2 by the synthesization coefficient (weight) corresponding thereto, then these multiplied results are synthesized in phase by the synthesizer 13, and the synthesized result is outputted as a demodulation signal of the path 1. The same process as by the finger F1 is executed by the fingers F2 through FN in a way that uses the reception data signals X1, X2 with respect to the paths 2 through N. Thereafter, a synthesizer 14 executes the RAKE synthesizing process of the outputs from the fingers F1 through FN with respect to the path 1 through the path N.

A scheme of the first conventional method is to reduce not only the auto-correlation of the noise in the SIR-RAKE as a component of the maximum ratio synthesization but also multi-path interference by taking account of the cross-correlation between the antennas of the same path. This scheme improves further the receiving quality of the SIR-RAKE. In the first conventional method, however, the calculation of the correlation does not follow up fluctuations of the signal at a high-speed moving time of a receiving station in order to obtain a noise correlation after despreading, resulting in a possibility that the receiving quality can not be improved.

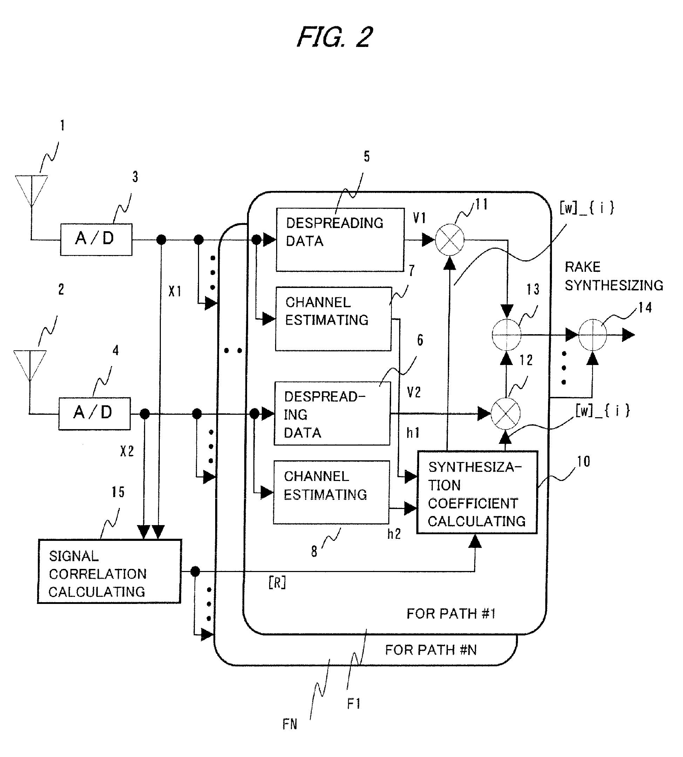

FIG. 2 is a diagram showing a configuration (a second conventional method) of the antenna diversity receiver (the RAKE receiver) in the prior art. The second conventional method involves obtaining the correlation by use of a pre-despreading signal in order to get the calculation of the correlation corresponding to the fluctuations of the signal at the high-speed moving time of the receiving station, and employing this correlation as a substitute for the noise correlation per path.

Therefore, the receiver illustrated in FIG. 2 has a signal correlation calculating unit 15 in place of the noise correlation calculating unit 9. The signal correlation calculating unit 15 obtains a signal correlation matrix (antenna correlation matrix) "[R]" consisting of the auto-correlation and the cross-correlation of the reception data signals X1, X2, and outputs the thus-obtained matrix to the synthesization coefficient calculating unit 10. The synthesization coefficient calculating unit 10 acquires the synthesization coefficient "$[W]_=[i]$" in a way that multiplies a channel estimated value "$[h]_=[i] = (h1, h2)$" given from each of the channel estimating units 7 and 8 by an inverse matrix of the signal correlation matrix "[R]". In the second conventional method, however, there might be a possibility that the receiving quality becomes inferior to other conventional methods in an environment where the receiving quality of the first conventional method is remarkably improved.

Technologies disclosed in the following Patent documents 1 and 2 are given by way of documents of the prior arts related to the present invention.

[Patent document 1] Japanese Patent Application Publication No. 3595493
[Patent document 2] Japanese Patent Application Laid-Open Publication No.2004-80360

SUMMARY OF THE INVENTION

It is an object of the present invention to provide a technology capable of obtaining a preferable receiving quality both at low-speed moving time and at high-speed moving time.

the present invention adopts the following means in order to accomplish the object.

Namely, the present invention is an antenna diversity receiver comprising:

a plurality of antennas;
a plurality of demodulating devices prepared per path, to which reception signals received by the plurality of antennas and coming from a plurality of paths are inputted;
a synthesizing unit synthesizing demodulated results of the reception signals with respect to the plurality of paths, which are outputted from the plurality of demodulating devices; and
a correlation calculating unit calculating a correlation between the antennas that are common between the plurality of paths,
each of the demodulating devices including:

a plurality of demodulating units outputting demodulation signals obtained by executing a demodulating process of the reception signals corresponding to the respective antennas;
a path weight calculating unit calculating a path weight representing a reception level ratio in the demodulating device by using a value obtained at a stage of the demodulating process by each of the demodulating units; and
an output unit outputting, to the synthesizing unit, as a result of the demodulation by the demodulating device, a result of synthesizing the demodulation signals of the respective demodulating units, which are multiplied by a synthesization coefficient using the correlation obtained in the correlation calculating unit and further multiplied by the path weight obtained in the path weight calculating unit.

According to the present invention, each demodulating device outputs the result of the demodulation in which to reflect the path weight equivalent to a path-to-path ratio lost in the second conventional method. Namely, the weight equivalent to the weight using the noise correlation in the first conventional method is reflected in the result of the demodulation by each demodulating device. Accordingly, the same receiving quality as by the first conventional method can be acquired at the low-speed moving time of the receiving station (receiver), and the receiving quality equal to or higher than by the second conventional method can be acquired at the high-speed moving time.

Preferably, according to the present invention, the output unit outputs, as the result of the demodulation by the demodulating device, a result of synthesizing the results of multiplying path-weighted synthesization coefficient, into which the synthesization coefficient is multiplied by the path weight, by demodulation signals of the respective demodulating units.

Further, preferably, the output unit outputs, as the result of the demodulation by the demodulating device, a result of multiplying, by the path weight, a signal obtained by synthesizing the results of multiplying the synthesization coefficient by the demodulation signals of the respective demodulating units.

Still further, preferably, according to the present invention, the demodulating unit includes:

a despreading data calculating unit outputting, as the demodulation signal, a despreading value of a data signal obtained by despreading a reception signal with a spreading code allocated to the data signal; and a channel estimating unit obtaining a channel estimated value by use of a despreading value of a common pilot signal acquired by despreading the reception signal with a spreading code allocated to the common pilot signal, and wherein the path weight calculating unit calculates the path weight from the channel estimated value.

Yet further, preferably, according to the present invention, the demodulating unit includes:

a despreading data calculating unit outputting, as the demodulation signal, a despreading value of a data signal obtained by despreading a reception signal with a spreading code allocated to the data signal; and a channel estimating unit obtaining a channel estimated value by use of a despreading value of a common pilot signal acquired by despreading the reception signal with a spreading code allocated to the common pilot signal, and wherein the path weight calculating unit calculates the path weight from a despreading value of the common pilot signal that is used for obtaining the channel estimated value.

According to the present invention, it is possible to provide a technology capable of obtaining the preferable receiving quality both at the low-speed moving time and at the high-speed moving time.

BRIEF DESCRIPTION OF THE DRAWINGS

FIG. 1 is a diagram showing a configuration of a receiver according to a first conventional method;
FIG. 2 is a diagram showing a configuration of the receiver according to a second conventional method;
FIG. 3 is a diagram showing a configuration of an antenna diversity receiver according to a first embodiment of the present invention;
FIG. 4 is a diagram showing a configuration of the antenna diversity receiver according to a second embodiment of the present;
FIG. 5 is a flowchart showing processes executed by a path-weighted synthesization coefficient calculating unit and by a path weight calculating unit exemplified in the first and second embodiments;
FIG. 6 is a graph of a simulation result, showing a receiving quality at low-speed moving time;
FIG. 7 is a graph of the simulation result, showing the receiving quality at high-speed moving time; and
FIG. 8 is a table showing a transmission environment in the simulations shown in FIGS. 6 and 7.

DETAILED DESCRIPTION OF THE PREFERRED EMBODIMENTS

Embodiments of the present invention will hereinafter be described with reference to the drawings. Configurations in the embodiments are exemplifications, and the present invention is not limited to the configurations in the embodiments.

[Outline of Embodiment]

The present embodiment adds a path weighting process so that a signal ratio between paths in RAKE synthesization becomes proper in the second conventional method by which to obtain the useful correlation at high-speed moving time. The second conventional method involves replacing the noise correlation obtained per path in the first conventional method with the pre-despreading signal correlation that is common to all of the paths, and hence the path-to-path ratio in the correlation existing in the first conventional method 1 is lost. The problem is solved by correcting this path-to-path ratio. Note that the information for the correction can be, it is assumed, calculated in a short period of time.

Let "[M]_[i]" be a matrix representing the noise correlation of a path i (i represents a path number) in the first conventional method and "[R]" be a matrix representing the pre-despreading signal correlation common to all of the paths in the second conventional method. The number of elements (element count) of rows and of columns, which form the matrix, and the number of element (element count) of vectors are each the same as the number of antennas (antenna count). Supposing that "[w]_[i]" is a synthesizing coefficient vector in the path i and "[h]_[i]" is a channel estimated value vector, the first conventional method can be expressed by the Formula [1], and the second conventional method can be expressed by the Formula [2].

[Mathematical Expression 1]

$$\mathbf{M}_i \mathbf{w}_{i,m} = \mathbf{h}_i \quad \cdots \quad [1]$$

[Mathematical Expression 2]

$$\mathbf{R} \mathbf{w}_{i,r} = \mathbf{h}_i \quad \cdots \quad [2]$$

In the Formulae [1] and [2], *m* denotes the first conventional method, and *r* denotes the second conventional method. A relationship between the synthesizing coefficient vectors "[w]_[i, m]" and "[w]_[i, r]" can be expressed by the following Formula [3].

[Mathematical Expression 3]

$$\mathbf{w}_{i,m} = \mathbf{K}_i \mathbf{w}_{i,r} \quad \cdots \quad [3]$$

The Formula 3 shows that a synthesization coefficient corresponding to the synthesization coefficient applied in the first conventional method is obtained in a way that multiplies a synthesization coefficient "[w]_[i, r]" applied in the second conventional method by K_[i]. "K_[i]" is a path weight that is different per path and denotes a path-to-path signal reception level ratio. The path weight "K_[i]" is, in terms of a mathematical expression, expressed by the following Formula [4]. In the Formula [4], " Ior" is an average power sum of the signals transmitted from the same transmitting station that transmits a desired signal. "^[†] " represents a conjugate transposition.

[Mathematical Expression 4]

$$\mathbf{K}_i = 1 + \text{Ior } \mathbf{h}_i^{\dagger} \mathbf{w}_{i,m} \quad \cdots \quad [4]$$

Herein, the Formula [4] contains a synthesization coefficient vector [w]_[i, m] drawn by use of the Formula [3] and the Formula [4]. Therefore, an approximation is employed in terms of practical use. If "Ior" is small, "K_[i] ≒ 1" is given. Whereas if "Ior" is large, "K_[i] ≒ Ior [h]_[i] ^[†] [w] _[i, m]" is given. An interference reduction effect of the synthesization method utilizing the correlation is exhibited when "Ior" is large, and hence what is suited to the case of "Ior" being large can be applied as an approximation.

Moreover, the path-to-path ratio is important in the path weighting. Accordingly, the common fixed coefficient (Ior) is unnecessary, and the approximation can be drawn out by taking account of "K_[i] ≒ [h]_[i] ^[†] [w]_[i, m]".

Furthermore, when taking account of correspondence to a high-speed signal fluctuation, it is desirable that the path weight can be calculated in short time. For instance, a channel estimated value "[h]_[i]" used for calculating the synthesization coefficient can be diverted. In the case of using the channel estimated value, it is considered that the following Formulae [5] through [8] are applied as calculation expressions of "K_[i]". Note that "j" represents a j-th antenna, and "J" stands for the number of antennas. Further, "Re" indicates a real part, and "Im" denotes an imaginary part.

[Mathematical Expression 5]

$$\mathbf{K}_i = \sum_{j=1}^{J} \left( \left| \text{Re}[\mathbf{h}_{i,j}] \right| + \left| \text{Im}[\mathbf{h}_{i,j}] \right| \right) \quad \cdots [5]$$

[Mathematical Expression 6]

$$\mathbf{K}_i = \sum_{j=1}^{J} \left| \mathbf{h}_{i,j} \right| \quad \cdots [6]$$

[Mathematical Expression 7]

$$K_i = \sum_{j=1}^{J} \left| h_{i,j} \right|^2 \quad \cdots [7]$$

[Mathematical Expression 8]

$$K_i = \sqrt{\sum_{j=1}^{J} \left| h_{i,j} \right|^2} \quad \cdots [8]$$

Among the Formulae [5] through [8], the Formula [5] shows a minimum computational complexity. Further, it is also considered that a despreading value "v_[i, j, PILOT]" of a common pilot signal that is used for the channel estimation and a despreading value "v_[i, j, DATA]" of a data signal, can be employed in place of the channel estimated value. The Formula [9] shows "K_[i]" using the despreading value of the common pilot signal, and the Formula [10] shows "K_[i]" employing the despreading value of the data signal.

[Mathematical Expression 9]

$$K_i = \sum_{j=1}^{J} \left( \left| \mathrm{Re}[v_{i,j,PILOT}] \right| + \left| \mathrm{Im}[v_{i,j,PILOT}] \right| \right) \quad \cdots [9]$$

[Mathematical Expression 10]

$$K_i = \sum_{j=1}^{J} \left( \left| \mathrm{Re}[v_{i,j,DATA}] \right| + \left| \mathrm{Im}[v_{i,j,DATA}] \right| \right) \quad \cdots [10]$$

Furthermore, it is considered that a noise "[n]_[i, j]" defined as a difference between the despreading value of the common pilot signal and an average value of the despreading values of the common pilot signals, an average value thereof and a synthesization coefficient vector "[w]_[i, LAST]" just anterior thereto, are each employed as a value of "K_[i]" (Formulae [11] and [12]).

[Mathematical Expression 11]

$$K_i = \sum_{j=1}^{J} \left( \left| h_{i,j} \right|^2 \Big/ \left| n_{i,j} \right|^2 \right) \quad \cdots [11]$$

[Mathematical Expression 12]

$$K_i = \mathbf{h}_i^{\dagger} \mathbf{w}_{i,LAST} \quad \cdots [12]$$

An initial value in the Formula [12] is set to "1", or a synthesization coefficient vector drawn out by another method can be obtained as "[w]_[i, LAST]".

The present invention proposes, for improving a quality of reception, a method of reflecting the path weight "K_[i]" given in the Formulae [5] through [12] in the synthesization coefficient vector "[w]_[i, r]" given in the second conventional method. The synthesization coefficient vector of the path i according to the present invention is expressed by the following Formula [13]

[Mathematical Expression 13]

$$\mathbf{w}_i = K_i \mathbf{R}^{-1} \mathbf{h}_i \quad \cdots [13]$$

<Configuration of Receiver>

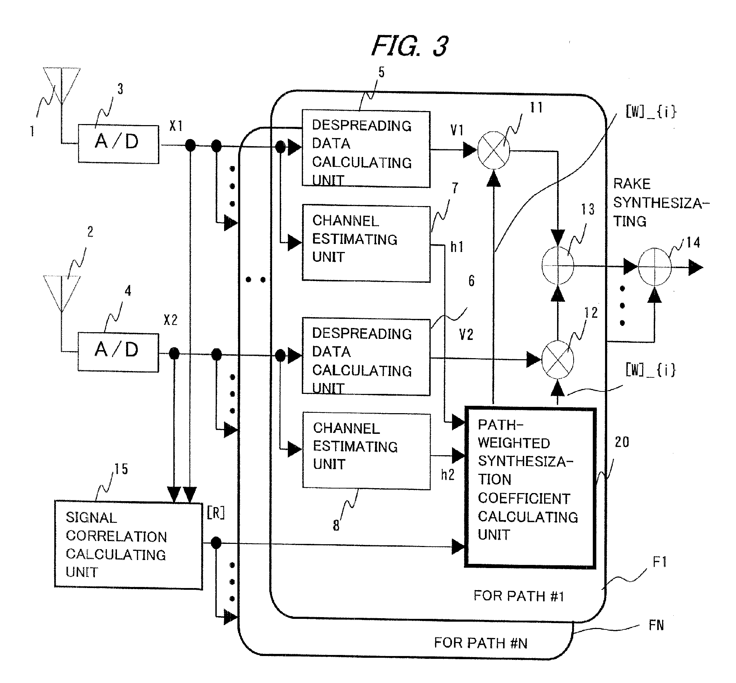

FIG. 3 is a diagram showing an example of a configuration of an antenna diversity receiver (RAKE receiver) according to a first embodiment of the present invention. In FIG. 3, the receiver has a plurality of antennas for receiving radio signals of CDMA signals transmitted from a transmitting station, and also a plurality of fingers F (despreading demodulators) corresponding to an arbitrary path count N.

The example shown in FIG. 1 is that the path count is "N" (path count N), and the receiver illustrated in FIG. 1 includes the antennas 1, 2 and the fingers F1, FN (F2) connected via A/D converters 3, 4 to the antennas 1, 2.

The A/D converter 3 receives an input of the reception signal that is received by the antenna 1 and amplified/demodulated by an unillustrated RF (Radio Frequency) module. The A/D converter 3 outputs a reception signal X1 defined as a complex baseband signal by A/D conversion. The reception signal X1 is inputted to the fingers F1 through FN. Similarly, the A/D converter 4 receives an input of the signal that is received by the antenna 2 and amplified/demodulated by the RF module, and outputs a reception signal (complex baseband signal) X2. Each of the reception signals X1, X2 contains a data symbol (data signal) that is spectrum-spread by use of a spreading code for a predetermined data signal and a pilot symbol (common pilot signal).

Each of the fingers F has the same configuration, and FIG. 3 illustrates the internal configuration of the finger F1 by way of an example. The finger F1 is a demodulating device for a path 1 (a first arrival path), and the fingers F2 through FN are demodulating devices for a path 2 through a path N (a second arrival path through an N-th arrival path). The finger F1 includes a depsreading data calculating unit 5 and a channel estimating unit 7 that correspond to the antenna 1, and further includes a depsreading data calculating unit 6 and a channel estimating unit 8 that correspond to the antenna 2.

The despreading value calculating unit 5 and the channel estimating unit 7 receive the reception signal X1 from the A/D converter 3. The despreading value calculating unit 5 executes a despreading process of multiplying the data signal contained in the reception signals X1 by a spreading code replica for a predetermined data signal, and outputs a despreading data signal V1 (a despreading value of the data signal: a demodulation signal) . Further, the channel estimating unit 7 executes the despreading process about the common pilot signal contained in the reception signals X1, and also executes a channel estimating process using a despreading value of the common pilot signal, which is obtained by this despreading process. The channel estimating unit 7 outputs a channel estimated value (an average value of the channel estimated values may also be set as a channel estimated value) h1 obtained by the channel estimating process.

The despreading value calculating unit 6 and the channel estimating unit 8 receive the reception signals X2 from the A/D converter 4. The despreading value calculating unit 6 executes the same despreading process as by the despreading value calculating unit 5 with respect to the reception signals X2, and outputs a despreading data signal V2. The channel estimating unit 8, in the same way as by the channel estimating unit 7, obtains a channel estimated value h2 from the reception signals X2 and outputs this value h2.

The despreading data signal V1 is outputted to a multiplier 11, and the despreading data signal V2 is outputted to a multiplier 12. Further, the channel estimated values h1 and h2([h]#i] ) are inputted to a path-weighted synthesization coefficient calculating unit 20.

The path-weighted synthesization coefficient calculating unit 20 is connected to a signal correlation calculating unit 15 to which the reception signals X1, X2 are inputted. The signal correlation calculating unit 15 generates a signal correlation matrix (an antenna correlation matrix) [R] common to all of the paths (the paths 1 through N) by employing the reception signals X1, X2 before being subjected to the despreading process, and inputs the generated correlation matrix to the path-weighted synthesization coefficient calculating unit 20.

The path-weighted synthesization coefficient calculating unit 20 is configured to calculate a path weight "K [i]" from the channel estimated value "[h]_[i]" by use of, e.g., any one of the Formulae [5] through [8] given above. The path-weighted synthesization coefficient calculating unit 20 performs an arithmetic operation of the Formula [13] by employing the calculated path weight "K#[i]", thereby calculating a synthesization coefficient vector "[w]_[i]" for the path i. The synthesization coefficient vector "[w]_[i]" is outputted to each of the multipliers 11, 12.

Each of the multipliers 11, 12 multiplies the despreading data signal by the synthesization coefficient (the weight), then a synthesizer 13 synthesizes these multiplied results in phase, and the synthesized result is outputted from the finger F1 as a result of demodulating the reception signal with respect to the path 1. The same operation as by the finger F1 is conducted by the fingers F2 through FN for the paths 2 through N, and demodulated results are outputted from the fingers F2 through FN with respect to the paths 2 through N. The outputs (the demodulated results) from the fingers F1 through FN are RAKE-synthesized by a RAKE synthesizer 14.

As described above, the configuration related to the receiver in the first embodiment is the same as that of the receiver in the second conventional method, except a point that the path-weighted synthesization coefficient calculating unit 20 is provided, and the synthesization coefficient vector using the signal correlation (an antenna-to-antenna correlation) is multiplied by the path weight "K_[i]".

It should be noted that the plurality of fingers of the receiver shown in FIG. 3 corresponds to a plurality of demodulating devices according to the present invention. Further, a 2-tuple of the despreading value calculating unit 5 and the channel estimating unit 7 and a 2-tuple of the despreading value calculating unit 6 and the channel estimating unit 8, correspond to a plurality of demodulating units according to the present invention. Further, the signal correlation calculating unit 9 corresponds to a correlation calculating unit according to the present invention. The path-weighted synthesization coefficient calculating unit 20 corresponds to a path weight calculating unit according to the present invention. Still further, the multipliers 11,12 and the synthesizer 13 correspond to an output unit according to the present invention. Yet further, the RAKE synthesizer 14 corresponds to a synthesizing unit according to the present invention.

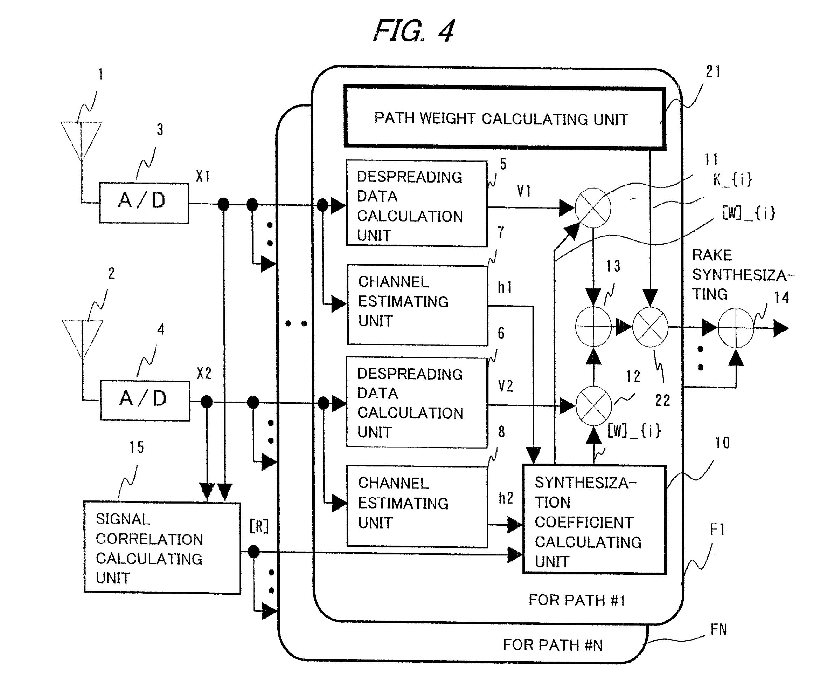

FIG. 4 is a diagram showing an example of a configuration of the antenna diversity receiver (the RAKE receiver) according to a second embodiment of the present invention. The following are different points from the receiver illustrated in FIG. 3.

(1) The same synthesization coefficient calculating unit 10 as in the second conventional method is provided as a substitute for the path-weighted synthesization coefficient calculating unit 20.

(2) A path weight calculating unit 21 and a multiplier 22 are provided, wherein the output of the synthesizer 13 is multiplied by the path weight "K_[i]" obtained by the path weight calculating unit 21. A multiplied result is inputted to the RAKE synthesizer 14.

The path weight calculating unit 21 is configured to calculate the path weight "K_[i]" on the basis of the Formulae [5] through [8] by obtaining a channel estimated value [h]_[i] from, e.g. , the channel estimating units 7, 8. Such a scheme can be also, however, taken that the path weight "K_[i]" based on the Formulae [9] through [12] is acquired by obtaining the despreading value of the common pilot signal and the despreading value of the data signal in the path-weighted synthesization coefficient calculating unit 20 and in the path-weight calculating unit 21 shown in FIGS. 3 and 4.

It should be noted that the path weight calculating unit 21 of the receiver illustrated in FIG. 4 corresponds to a path weight calculating unit according to the present invention. Moreover, the multipliers 11, 12, the synthesizer 13 and the multiplier 22 correspond to an output unit according to the present invention.

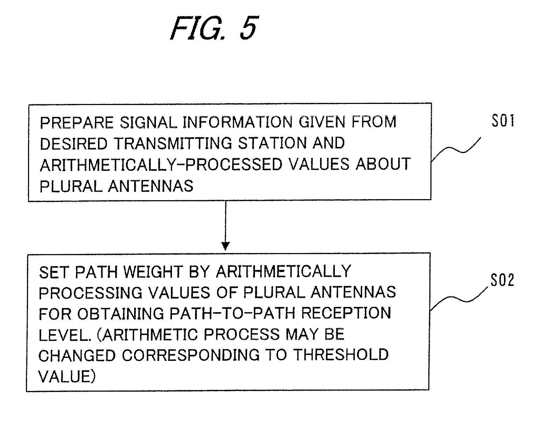

FIG. 5 is a flowchart showing how the path weight is calculated. A process shown in FIG. 5 is executed for every path by the path-weighted synthesization coefficient calculating unit 20 or the path weight calculating unit 21 of each finger F. In FIG. 5, the path-weighted synthesization coefficient calculating unit 20 or the path weight calculating unit 21 prepares, for every path, signals and information (e.g., the despreading value of the data signal, the despreading value of the common pilot signal) given from a desired transmitting station, or arithmetically-processed values thereof (, e.g., the channel estimated value, a noise and a just-anterior synthesization coefficient vector) with respect to the plurality of antennas (step S01).

Next, the path-weighted synthesization coefficient calculating unit 20 or the path weight calculating unit 21 obtains the path weight corresponding to a path-to-path signal reception level. Namely, the path-weighted synthesization coefficient calculating unit 20 or the path weight calculating unit 21 obtains the path weight "K_[i]" by executing the arithmetic processes (the Formulae [5] through [12]) of values (the signals and the information given from the desired transmitting station, or the arithmetically processed values thereof, i.e., the values obtained at a stage of the demodulating process by the demodulating unit) of the plurality of antennas (step S02).

Note that a predetermined threshold value corresponding to a path environment is prepared, and the arithmetic process may be changed in accordance with the threshold value in regard to the processes in steps S01 and S02 given above.

<Operational Effect in Embodiment>

According to the present embodiment, the path weight "K_[i]" differing between the paths is calculated and is reflected in the synthesization coefficient obtained from the signal correlation. With this contrivance, the receiving quality equal to the quality in the first conventional method can be acquired in an environment where a moving speed of a mobile device (which is a receiving station (such as a mobile terminal) having the receiver), and the receiving quality equal to or higher than in the second conventional method can be obtained in the environment where the moving speed of the mobile device is high.

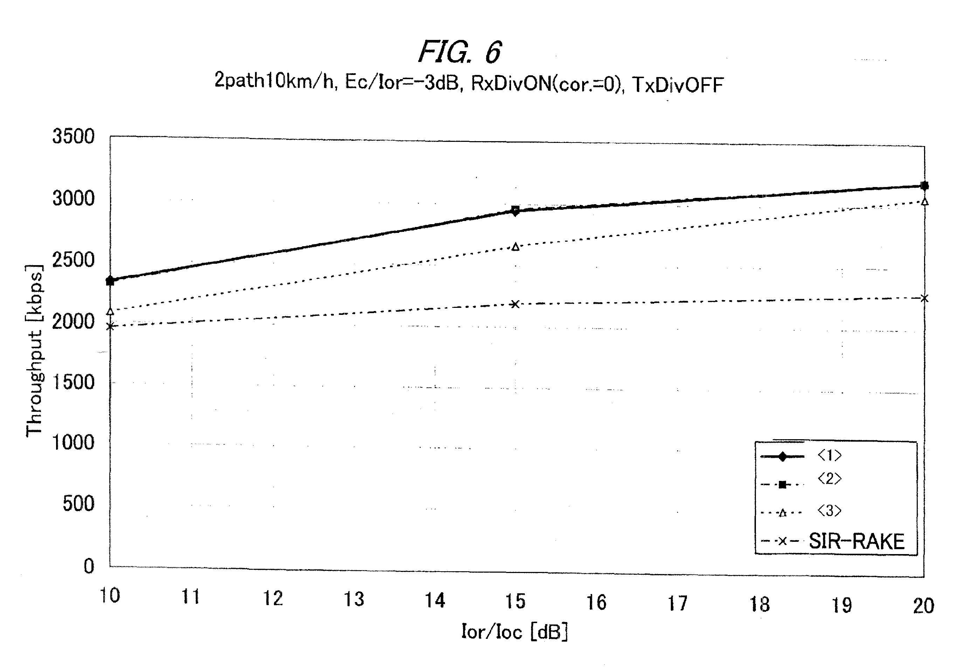

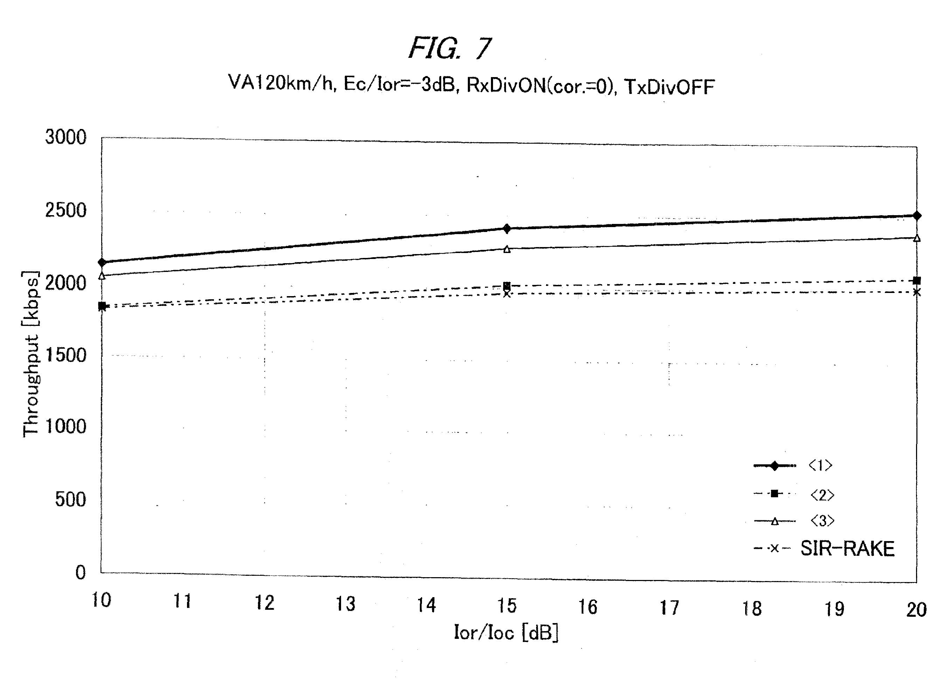

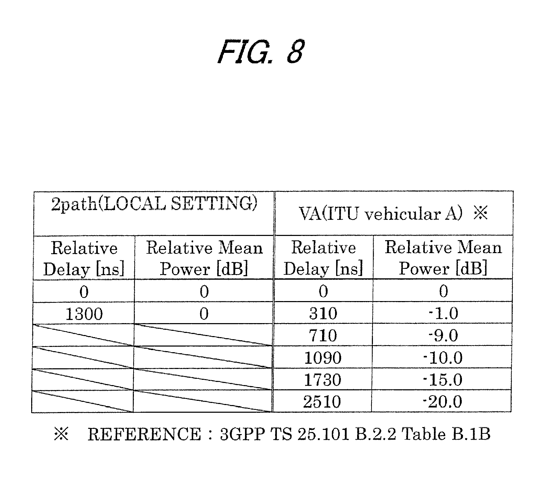

FIG. 6 is a graph showing a simulation result in the environment where the moving speed of the mobile device is low, FIG. 7 is a graph showing the simulation result in the environment where the moving speed of the mobile device is high, and FIG. 8 is a table showing a signal transmission environment in the simulations shown in FIGS. 6 and 7.

FIGS. 6 and 7 show the simulation results in the case of obtaining the path weight by employing the Formula [5] in the configuration (the proposed method: <1> in FIGS. 6 and 7) of the receiver according to the present invention as exemplified in the first embodiment and the second embodiment. Further, a throughput is used as a value indicating an effect of how much the receiving quality is improved. Still further, FIGS. 6 and 7 show the simulation results with respect to SIR-RAKE (Signal-to-Interference Ratio RAKE), the first conventional method (<2> in FIGS. 6 and 7) and the second conventional method (<3> in FIGS. 6 and 7) by way of comparative examples with the proposed method.

FIG. 6 shows the simulation result in a case where the receiving station (the mobile terminal) receives the signals via two paths while moving at 10 km/h. Moreover, the environment is such that a ratio (Ec/Ior) of the electric power of the despreading data signal to the transmission power (Ior) of a transmitting station (a base station) is on the order of -3 dB, and reception diversity is ON (no correlation) while transmission diversity is OFF. Furthermore, in the path environment, as illustrated on the left side in FIG. 8, delay time of a delay path in the two paths is on the order of 1300 ns, and there is no difference in amplitude (reception level). Further, in the graph shown in FIG. 6, the ratio "Ior/Ioc" (transmission power/noise ratio) is given along the axis of abscissa, and the throughput is given along the axis of ordinate. As illustrated in FIG. 6, it is understood that in the low-speed environment, the proposed method gains a throughput (the receiving quality) that is better than by the SIR-RAKE and the second conventional method and is equal to that of the first conventional method.

In the environment shown in FIG. 7, there is shown the simulation result in a case where the receiving station (the mobile terminal) is moving at 120 km/h in a transmission environment VA (see the right side in FIG. 8) defined by ITU (International Telecommunications Union). Other environments are the same as those explained in FIG. 6. It is recognized from FIG. 7 that in the high-speed environment, the second conventional method is superior in terms of the receiving quality to the first conventional method, however, the proposed method gains a much better receiving quality than by those conventional methods.

As described above, the receiver according to the embodiments is capable of acquiring the receiving quality that is equal to or higher than by the conventional methods both at the low-speed moving time and at the high-speed moving time.

<Others>

The embodiments discussed above disclose the following inventions. The following inventions can be combined as the necessity may arise within the range that does not deviate from the purpose of the present invention.

**Claims**

1.   An antenna diversity receiver comprising:

a plurality of antennas;
a plurality of demodulating devices prepared per path that reception signals received by the plurality of antennas and coming from a plurality of paths are inputted;
a synthesizing unit synthesizing demodulated results of the reception signals with respect to the plurality of paths, which are outputted from the plurality of demodulating devices; and
a correlation calculating unit calculating a correlation between the antennas that are common between the plurality of paths,
each of the demodulating devices including:

a plurality of demodulating units outputting demodulation signals obtained by executing a demodulating process of the reception signals corresponding to the respective antennas;
a path weight calculating unit calculating a path weight for reflecting a path-to-path reception level ratio in the synthesizing process by the synthesizing unit in a way that uses a value obtained at a stage of the demodulating process by each of the demodulating units; and
an output unit outputting, to the synthesizing unit, as a result of the demodulation by the demodulating device, a result of synthesizing the demodulation signals of the respective demodulating units, which are multiplied by a synthesization coefficient using the correlation obtained in the correlation calculating unit and further multiplied by the path weight obtained in the path weight calculating unit.

2.   An antenna diversity receiver according to claim 1, wherein the output unit outputs, as the result of the demodulation by the demodulating device, a result of synthesizing the results of multiplying path-weighted synthesization coefficient, into which the synthesization coefficient is multiplied by the path weight, by demodulation signals of the respective demodulating units.

3.   An antenna diversity receiver according to claim 1, wherein the output unit outputs, as the result of the demodulation by the demodulating device, a result of multiplying, by the path weight, a signal obtained by synthesizing the results of multiplying the synthesization coefficient by the demodulation signals of the respective demodulating units.

4. An antenna diversity receiver according to claim 1, wherein the demodulating unit includes:

a despreading data calculating unit outputting, as the demodulation signal, a despreading value of a data signal obtained by despreading a reception signal with a spreading code allocated to the data signal; and
a channel estimating unit obtaining a channel estimated value by use of a despreading value of a common pilot signal acquired by despreading the reception signal with a spreading code allocated to the common pilot signal, and wherein the path weight calculating unit calculates the path weight from the channel estimated value.

5. An antenna diversity receiver according to claim 1, wherein the demodulating unit includes:

a despreading data calculating unit outputting, as the demodulation signal, a despreading value of a data signal obtained by despreading a reception signal with a spreading code allocated to the data signal; and
a channel estimating unit obtaining a channel estimated value by use of a despreading value of a common pilot signal acquired by despreading the reception signal with a spreading code allocated to the common pilot signal, and wherein the path weight calculating unit calculates the path weight from a despreading value of the common pilot signal that is used for obtaining the channel estimated value.

6. An antenna diversity receiver according to claim 1, wherein the demodulating unit includes:

a despreading data calculating unit outputting, as the demodulation signal, a despreading value of a data signal obtained by despreading a reception signal with a spreading code allocated to the data signal; and
a channel estimating unit obtaining a channel estimated value by use of a despreading value of a common pilot signal acquired by despreading the reception signal with a spreading code allocated to the common pilot signal, and wherein the path weight calculating unit calculates the path weight from the despreading data.

# FIG. 1

# FIG. 2

RAKE
SYNTHESIZING

DESPREADING
DATA

CHANNEL
ESTIMATING

DESPREAD-
ING
DATA

CHANNEL
ESTIMATING

SYNTHESIZA-
TION
COEFFICIENT
CALCULATING

SIGNAL
CORRELATION
CALCULATING

FOR PATH #1

FOR PATH #N

# FIG. 3

DESPREADING DATA CALCULATING UNIT — 5

CHANNEL ESTIMATING UNIT — 7

DESPREADING DATA CALCULATING UNIT — 6

CHANNEL ESTIMATING UNIT — 8

PATH-WEIGHTED SYNTHESIZATION COEFFICIENT CALCULATING UNIT — 20

SIGNAL CORRELATION CALCULATING UNIT — 15

RAKE SYNTHESIZATING

A/D — 3

A/D — 4

FOR PATH #1 — F1

FOR PATH #N — FN

$[W]\_\{i\}$

$V1$, $V2$, $h1$, $h2$, $X1$, $X2$, $[R]$

11, 12, 13, 14

FIG. 4

FOR PATH #1

FOR PATH #N

PATH WEIGHT CALCULATING UNIT

DESPREADING DATA CALCULATION UNIT

CHANNEL ESTIMATING UNIT

DESPREADING DATA CALCULATION UNIT

CHANNEL ESTIMATING UNIT

SYNTHESIZA-TION COEFFICIENT CALCULATING UNIT

SIGNAL CORRELATION CALCULATING UNIT

RAKE SYNTHESIZA-TING

A / D

A / D

EP 1 826 919 A2

14

## FIG. 5

PREPARE SIGNAL INFORMATION GIVEN FROM DESIRED TRANSMITTING STATION AND ARITHMETICALLY-PROCESSED VALUES ABOUT PLURAL ANTENNAS — S01

SET PATH WEIGHT BY ARITHMETICALLY PROCESSING VALUES OF PLURAL ANTENNAS FOR OBTAINING PATH-TO-PATH RECEPTION LEVEL. (ARITHMETIC PROCESS MAY BE CHANGED CORRESPONDING TO THRESHOLD VALUE) — S02

## FIG. 6

2path10km/h, Ec/Ior=-3dB, RxDivON(cor.=0), TxDivOFF

EP 1 826 919 A2

*FIG. 7*

VA120km/h, Ec/Ior=-3dB, RxDivON(cor.=0), TxDivOFF

Throughput [kbps]

3000

2500

2000

1500

1000

500

0

10  11  12  13  14  15  16  17  18  19  20

Ior/Ioc [dB]

⟨1⟩
⟨2⟩
⟨3⟩
–x– SIR–RAKE

17

# FIG. 8

| 2path(LOCAL SETTING) | | VA(ITU vehicular A) ※ | |
|---|---|---|---|
| Relative Delay [ns] | Relative Mean Power [dB] | Relative Delay [ns] | Relative Mean Power [dB] |
| 0 | 0 | 0 | 0 |
| 1300 | 0 | 310 | -1.0 |
| | | 710 | -9.0 |
| | | 1090 | -10.0 |
| | | 1730 | -15.0 |
| | | 2510 | -20.0 |

※ REFERENCE : 3GPP TS 25.101 B.2.2 Table B.1B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3595493 B

- JP 2004080360 A